# EUROPEAN PATENT APPLICATION

(11) **EP 4 759 790 A1**
(43) Date of publication of application: **17.06.2026**
(21) Application number: 24219936.2
(22) Date of filing: 13.12.2024
(51) Int. Cl.: C05G 3/20, A01N 25/26, C05G 3/40, C05G 3/90, C05G 5/12, C05G 5/30

(54) **GREEN UREASE INHIBITOR COATING**

(71) Applicant: ArrMaz Products Inc., Mulberry, FL 33860 (US)
(72) Inventor: WILLIAMS, MICHAEL, Mulberry, 33860 (US); MCKAY, HEATHER, Mulberry, 33860 (US)
(74) Representative: Bandpay & Greuter

(57) **Abstract**

A fertilizer coating which includes a urease inhibitor, such as N-(n-butyl) thiophosphoric triamide ("NBPT"), a bio-renewable solvent, preferably the bio-renewable solvent comprises at least one from the group of glycerin, corn syrup, dextrin, sorbitol, and combinations thereof, a polar compound derived from a renewable feed stock, optionally green, preferably an aprotic compound, more preferably at least one of dimethyl isosorbide ("DMI"), valerolactone, cyrene, levoglucosan or combinations thereof, further preferably the dimethyl isosorbide, and preferably further comprising a water soluble dye is included herein. Also included is a coated fertilizer with the aforementioned fertilizer coating as well as methods of making the coating and the coated fertilizer.

## Description

### FIELD OF THE INVENTION

This invention relates generally to granular fertilizers including N-(n-butyl) thiophosphoric triamide ("NBPT"), a bio-renewable solvent and a polar compound derived from a renewable feed stock (for example but not limited to dimethyl isosorbide ("DMI")). Embodiments of the granular fertilizers disclosed herein have exhibited reduced loss or fertilizer through ammonia volatilization. The present invention also relates to the method making a fertilizer having a urease inhibitor coating. The granular fertilizer may be formed by incorporating a NBPT, the bio-renewable solvent and the polar compound derived from a renewable feed stock into the fertilizer. Methods that may be used to incorporate the NBPT may include coatings, crystallization, granulation or prilling.

### BACKGROUND OF THE INVENTION

In agriculture inhibiting the ammonia volatilization of fertilizer has been an on-going effort. Prior attempts include EP3851426 to Grupa Azoty. Disclosed therein is a liquid composition with an active composition of NBPT (15-35%) and a solvent system comprised of an aprotic alkyl sulfoxide and at least one co-solvent from a list of glycerin, benzoic acid benzyl ester, propylene carbonate, and N,N-dimethylacetamide ("DMA").

Another example of similar work is US2014090432 to Soilgenic Technologies LLC. The application discloses a formulation comprising NBPT (5-75%) and one or more of an alkylene carbonate, alkyl sulfoxides (including sulfolane), polyol or alkylene glycols (including glycerin), alkyl lactate, and possibly it is diluted with water.

A further example is BR112015007327 also from Soilgenic Technologies LLC. The Brazilian application includes a composition characterized by the fact that the composition comprises aprotic solvents and protic solvents. The aprotic solvents are disclosed as alkylene carbonates, cyclohexylpyyrolidone, and the protic solvents are described such as dimethyl sulfoxide and alcohols/polyols.

In US9732008 a coating formulation comprising NBPT and dimethyl sulfoxide (DMSO) or other alkyl sulfoxides, and glycerin and fertilizers coated with the formulation are disclosed. US10301231 also discloses a formulation with DMSO.

### BRIEF DESCRITPION

The below embodiments and others of the present disclosure will become apparent in light of the following disclosure.

A first aspect of the invention relates to a fertilizer coating comprising
a. a urease inhibitor, preferably the urease inhibitor comprises a N-(n-butyl) thiophosphoric triamide ("NBPT"),
b. a bio-renewable solvent,
c. a third component having
   i. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
   ii. no more than about 5 wt% of a carbonate compound, preferably no more than about 1 wt% of the carbonate compound, more preferably no more than about 0.1 wt% of the carbonate compound, further preferably devoid of the carbonate compound, and/or
   iii. no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone.

In a preferred embodiment, the fertilizer coating is free from dimethyl sulfoxide (DMSO).

In a preferred embodiment, the bio-renewable solvent comprises at least one from the group of glycerin, corn syrup, dextrin, sorbitol and any combination thereof.

In an embodiment, the third component is a polar compound derived from a renewable feed stock and the amount of the polar compound derived from the renewable feed stock in the fertilizer coating comprises no more than about 20 wt%, more preferably no more than about 15 wt%, further preferably at least about 1 wt%, even further preferably at least about 5 wt%. Alternatively an amount of the polar compound derived from the renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof.

In an embodiment, the polar compound is an aprotic compound.

In a preferred embodiment, the aprotic compound is selected from dimethyl isosorbide ("DMI"), valerolactone, cyrene, levoglucosan or combinations thereof, preferably the dimethyl isosorbide

In an embodiment, the amount of the bio-renewable solvent in the fertilizer coating comprises at least about 50 wt%, more preferably no more than about 90 wt%, further preferably no more than about 85 wt%, even further preferably at least about 60 wt%.

Alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

In a preferred embodiment, the bio-renewable solvent is glycerin.

In an embodiment, the amount of the urease inhibitor, preferably the NBPT, in the fertilizer coating comprises at least about 5 wt%, more preferably no more than about 30 wt%, further preferably no more than about 25 wt%, even further at least about 10 wt%. Alternatively, an amount of the urease inhibitor in the fertilizer coating, preferably the NBPT, comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

In an embodiment, the fertilizer coating further comprises a water soluble dye.

In a preferred embodiment, an amount of the water soluble dye in the fertilizer coating comprises no more than about 10 wt%, more preferably no more than about 5 wt%, further preferably at least about 1 wt%, more further preferably up to about 5 wt%. Alternatively an amount of the water soluble dye in the fertilizer coating comprises from about 1 wt% to about 3, about 3 wt% to about 5 wt%, about 5 wt% to about 7 wt%, about 7 wt% to about 10 wt%, or combinations thereof.

In an embodiment, the coating comprises more than 10 wt% of the NBPT, preferably more than 15 wt%, more preferably at least about 20 wt%, further preferably more than 20 wt%.

In an embodiment, the coating exhibiting stability for at least about 30 days, preferably at least about 45 days, more preferably at least about 60 days at or about room temperature, preferably at about 25°C+5°C, as determined by methods described herein.

In an embodiment, the bio-renewable solvent comprises glycerin wherein the glycerin comprises less than 50 wt% of water, preferably no more than about 25 wt% of the water, more preferably no more than about 10 wt% of the water, further preferably no more than about 5 wt% of the water, even further preferably no more than 2 wt% of the water, preferably determined by one of direct distillation, Phosphorous Pentoxide vacuum method, Karl-Fischer Titration, Halogen Moisture Analysis or as stated in the certificate analysis and/or the datasheet provided by the product vendor.

In an embodiment, the glycerin having a pH of at least about 6.0 to no more than about 8.0, preferably at least about 6.5 to no more than about 7.5.

In an embodiment, the fertilizer coating further comprises a release agent.

Preferably the release agent comprises a cyano-material.

In an embodiment, the NBPT selected from the group of sole NBPT, a controlled release form of NBPT, NBPT and other urease inhibitors, NBPT and nitrification inhibitors and combinations thereof.

In an embodiment, the polar compound derived from the renewable feed stock having
a. a dipole moment of more than about 4.1D at 25°C, preferably more than 4.1D at 25°C, more preferably at least about 4.2D at 25°C, and/or
b. a refractive index of the polar compound derived from a renewable feed stock comprises less than about 1.467 at 20°C, even further preferably less than about 1.465 at 20°C, still further preferably less than about 1.463 at 20°C, most preferably, and/or
c. the polar compound derived from a renewable feed stock devoid of at least one of a nitrogen atom, sulfur atom or the combination thereof.

Another aspect of the invention relates to a fertilizer granular comprising a core and the fertilizer coating as described herein.

Preferably the core comprises at least one nutrient, preferably a plurality of nutrients, more preferably either the at least one nutrient or the plurality of nutrients comprises at least one of ammonium sulfate, urea, potash (e.g., muriate of potash), potassium chloride, NPK, biological origin and combinations thereof, more preferably biological origin comprises at least one from the group of animal waste, crop residues, compost, biosolids and combinations thereof.

In an embodiment, the granular fertilizer has a shelf life of more than about 2 weeks, preferably more than about 3 weeks, more preferably more than about 4 weeks, even more preferably more than about 6 weeks, further preferably more than about 8 weeks, even further preferably more than about 10 weeks.

In an embodiment, the granular fertilizer exhibits a reduction in caking of up to about 25% compared to the uncoated granular, preferably at least about 10%, more preferably at least about 15%, caking reduction determined as described herein.

In an embodiment, the third component derived from the renewable feed stock, optionally green, preferably an aprotic compound, more preferably at least one of dimethyl isosorbide ("DMI"), valerolactone, cyrene, levoglucosan or combinations thereof, further preferably the dimethyl isosorbide.

Another aspect of the invention relates to a method of making coated fertilizer comprising applying, preferably spraying, a solution to a core comprising a nutrient, the solution comprising
a. an urease inhibitor, preferably the urease inhibitor comprising a N-(n-butyl) thiophosphoric triamide ("NBPT"),
b. a bio-renewable solvent, preferably the bio-renewable solvent comprises at least one from the group of glycerin, corn syrup, dextrin, sorbitol and any combination thereof,
c. a third component having
   i. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
   ii. no more than about 5 wt% of a carbonate compound, preferably no more than about 1 wt% of the carbonate compound, more preferably no more than about 0.1 wt% of the carbonate compound, further preferably devoid of the carbonate compound, and/or
   iii. no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone.

### DETAILED DESCRIPTION

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication were specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations may be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" may mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 1, 2, 3, 4, 5, 10, 15, 20, 30, 40, 50, 100, etc. The term "at least one" may extend up to 100 or 1000 or more depending on the term to which it is attached. In addition, the quantities of 100/1000 are not to be considered limiting as lower or higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first", "second", "third", "fourth", etc.) is solely for the purpose of differentiating between two or more items and, unless otherwise stated, is not meant to imply any sequence or order or importance to one item over another or any order of addition.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof' as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

Weight percentages (wt%) provided herein are on the basis of the entire composition unless stated otherwise.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that may vary depending upon the desired properties to be obtained in carrying out the invention.

### Coating

One aspect of the invention disclosed herein is a fertilizer coating. The coating may comprise a urease inhibitor, preferably the urease inhibitor comprises a N-(n-butyl) thiophosphoric triamide ("NBPT"). The coating may also include a bio-renewable solvent, preferably the bio-renewable solvent comprises at least one from the group of glycerin, corn syrup, dextrin, sorbitol and any combination thereof. The coating may further include a polar compound derived from a renewable feed stock, optionally green, preferably an aprotic compound, more preferably at least one of dimethyl isosorbide ("DMI"), valerolactone, cyrene, levoglucosan or combinations thereof, further preferably the dimethyl isosorbide. Optionally the coating may also include a water soluble dye.

The composition which forms the coating disclosed herein may be a low-viscosity liquid that functions as a sprayable coating for urea fertilizer. The coating composition may contain about 50-85% crude glycerin, technical-grade glycerin or combinations thereof, 1-20% dimethyl isosorbide, 0-5% dye, and 5-30% NBPT.

The fertilizer disclosed herein may include NBPT, DMI and optionally glycerin. Preferably, the fertilizer is free of hazardous solvent, surfactants and/or mineral fillers. More preferably, the coating of the invention is free from DMSO.

Suitable glycerin may include technical glycerin, crude grade glycerin and any combinations thereof. An embodiment of the technical grade glycerin may comprise about 95% - 100% wt of glycerol, and about 0% - 5% wt of water. Technical grade glycerin may contain no more than about 5 wt% of water, exemplary amounts of water in the technical grade glycerin may include less than about 4 wt%, less than about 3 wt%, less than about 2 wt% and no more than about 1 wt%.

The crude glycerin typically comprises about 75% - 80% wt of glycerol, and less than about 25% wt of water, preferably less than about 15% wt of water. The crude glycerin may have a water content of less than about 45 wt%, preferably less than about 35 wt%, more preferably less than about 20 wt%, further preferably less than about 15 wt%, even more preferably less than about 10 wt%, more further preferably less than about 5 wt% of the total weight of the granular fertilizer. Otherwise stated, crude glycerin may contain no more than about 45 wt% of water, exemplary amounts of water in the crude glycerin may include less than about 35 wt%, less than about 25 wt%, less than about 20 wt%, less than about 15% wt , and less than about 10% wt based on the weight of the glycerin component.

A preferred amount of the polar compound derived from the renewable feed stock in the fertilizer coating may comprise no more than about 20 wt%, more preferably no more than about 15 wt%, further preferably at least about 1 wt%, even further preferably at least about 5 wt%. Alternatively, an amount of the polar compound derived from the renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof.

Also a preferred amount of the bio-renewable solvent in the fertilizer coating, preferably the glycerin, may comprise at least about 50 wt%, more preferably no more than about 90 wt%, further preferably no more than about 85 wt%, even further preferably at least about 60 wt%. Alternatively, an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

Further a preferred amount of the urease inhibitor in the fertilizer coating, preferably the NBPT, may comprise at least about 5 wt%, more preferably no more than about 30 wt%, further preferably no more than about 25 wt%, even further at least about 10 wt%. Alternatively, an amount of the urease inhibitor, preferably the NBPT, comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

An additional embodiment is another fertilizer coating. In this embodiment, the coating may include a urease inhibitor, preferably the urease inhibitor comprises a N-(n-butyl) thiophosphoric triamide ("NBPT"). The coating may also include a bio-renewable solvent, preferably the bio-renewable solvent comprises at least one from the group of glycerin, corn syrup, dextrin, sorbitol and any combination thereof. The coating may include a third component having no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or the coating having no more than about 5 wt% of a carbonate compound, preferably no more than about 1 wt% of the carbonate compound, more preferably no more than about 0.1 wt% of the carbonate compound, further preferably devoid of the carbonate compound, and/or the coating having no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone. This embodiment of the fertilizer coating may also include the optional water soluble dye.

Preferably an amount of the third component in the fertilizer coating may comprise no more than about 20 wt%, more preferably no more than about 15 wt%, further preferably at least about 1 wt%, even further preferably at least about 5 wt%. Alternatively, an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof.

It is also preferred an amount of the bio-renewable solvent in the fertilizer coating, preferably the glycerin, comprises at least about 50 wt%, more preferably no more than about 90 wt%, further preferably no more than about 85 wt%, even further preferably at least about 60 wt%. Alternatively, an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

It is further preferred an amount of the urease inhibitor in the fertilizer coating, preferably the NBPT, comprises at least about 5 wt%, more preferably no more than about 30 wt%, further preferably no more than about 25 wt%, even further at least about 10 wt%. Alternatively, an amount of the urease inhibitor in the fertilizer coating, preferably the NBPT, comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

A further embodiment disclosed herein is a fertilizer coating having a urease inhibitor, preferably the urease inhibitor comprising a N-(n-butyl) thiophosphoric triamide ("NBPT"), a bio-renewable solvent, preferably the bio-renewable solvent comprises at least one from the group of glycerin, corn syrup, dextrin, sorbitol and any combination thereof, a polar compound derived from a renewable feed stock having a dipole moment of more than about 4.1D at 25°C, preferably more than 4.1D at 25°C, more preferably at least about 4.2D at 25°C, further preferably a refractive index of the polar compound derived from a renewable feed stock comprises less than about 1.467 at 20°C, even further preferably less than about 1.465 at 20°C, still further preferably less than about 1.463 at 20°C, and an optional water soluble dye. The dipole moment can be measured by the dielectric method which refers to calculating the dipole moment from the dielectric constant of a substance. The dielectric constant , also known as relative permittivity, of a material is measured in the lab and is generally available from chemical suppliers as a standard specification for many chemicals.

Preferably an amount of the third component in the fertilizer coating comprises no more than about 20 wt%, more preferably no more than about 15 wt%, further preferably at least about 1 wt%, even further preferably at least about 5 wt%. Alternatively, an amount of the polar compound derived from the renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof.

It is also preferred an amount of the bio-renewable solvent in the fertilizer coating, preferably the glycerin, comprises at least about 50 wt%, more preferably no more than about 90 wt%, further preferably no more than about 85 wt%, even further preferably at least about 60 wt%. Alternatively, an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

Further preferred an amount of the urease inhibitor in the fertilizer coating, preferably the NBPT, comprises at least about 5 wt%, more preferably no more than about 30 wt%, further preferably no more than about 25 wt%, even further at least about 10 wt%. Alternatively, an amount of the NBPT in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

A preferred amount of the polar compound derived from the renewable feed stock in the fertilizer coating comprises no more than about 20 wt%, more preferably no more than about 15 wt%, further preferably at least about 1 wt%, even further preferably at least about 5 wt%. Alternatively, an amount of the polar compound derived from the renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof.

Preferably an amount of the bio-renewable solvent, preferably the glycerin, in the fertilizer coating comprises at least about 50 wt%, more preferably no more than about 90 wt%, further preferably no more than about 85 wt%, even further preferably at least about 60 wt%. Alternatively, an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

Also preferred an amount of the urease inhibitor, preferably the NBPT, in the fertilizer coating comprises at least about 5 wt%, more preferably no more than about 30 wt%, further preferably no more than about 25 wt%, even further at least about 10 wt%. Alternatively, an amount of the urease inhibitor, preferably the NBPT, in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

It is also preferred the applying occurs prior to transporting the coated fertilizer to a retail location.

In one embodiment, disclosed herein is a coating that functions as a urease inhibitor to decrease the loss of fertilizer through ammonia volatilization while containing only bio-sourced, bio-degradable, and renewable raw materials in order to reduce the hazards associated with traditional NBPT-based coating carriers.

Embodiments disclosed herein have the advantage of using nonhazardous materials to dissolve NBPT for application as a fertilizer coating, preferably using only nonhazardous materials. Additionally embodiments of the coating disclosed herein have improved the stability of the coating and/or increased the resistance of the NBPT to crystallize when in solution. Further embodiments, disclosed herein do not require the use of mineral fillers and/or surfactants to disperse the NBPT into the coating solution. The raw materials described herein may also be described as bio-sourced and/or bio-degradable.

A further advantage of the coating described herein is an odor of the coating is more pleasing than typical NBPT coatings. The odor is more characteristic of diluted NBPT compositions. Preferably, the coating composition does not have a pungent odor, i.e., a cabbage-like odor. It is preferred that the coating composition does not off gas a sufficient amount of methyl mercaptan for the composition to exhibit a cabbage-like odor at ambient conditions as well as during use conditions of the composition.

Furthermore embodiments of the NBPT coating described herein can be formulated with raw materials that are sustainable and/or renewable. The raw materials may also be considered "green". "Green" is used herein to describe a raw material that is considered environmentally friendly, typically derived from renewable sources like agricultural crops, and designed to minimize environmental impact compared to traditional petrochemical solvents.

### Granular fertilizer

Another aspect of the invention relates to a fertilizer granular comprising, or consisting essentially of, a nutrient, NBPT, DMI, bio-renewable solvent and an optional water soluble dye. The granular fertilizer includes at least one nutrient. Examples of the nutrient may include phosphorus, potassium, calcium, magnesium and/or other alkaline metals and/or alkaline earth metals, sulfur in its different oxidation states, nitrogen in its nitrate and/or ammonium and/or urea state, such as ammonium nitrates, ammonium sulphates and phosphates, potassium chloride (e.g., MOP) and complex nitrogen-based and/or phosphorus-based and/or potassium-based fertilizers, including NPK, NP, PK, and others, biological origin and combinations thereof, more preferably biological origin comprises at least one from the group of animal waste, crop residues, compost, biosolids and combinations thereof.

As stated herein, examples of the nutrient may include at least one of nitrogen, sulfur, phosphorous, potassium and combinations thereof. Further examples of the nutrient may include a plurality of nutrients. The plurality of nutrients may be referred to as a blend of nutrients, preferably the blend of nutrients comprises at least one of ammonium nitrates ("AN"), ammonium sulfates ("AS") and phosphates, potassium chloride (e.g., MOP (muriate of potash) and complex nitrogen-based and/or phosphorus-based and/or potassium-based fertilizers, including urea, potash, NPK, NP, MAP (monoammonium phosphate) , DAP (diammonium phosphate), TSP (trisodium phosphate), PK, micronutrients, biological origins and combinations thereof, preferably biological origins may comprise one of animal waste, crop residues, compost, biosolids and combinations thereof.

If an organic granular fertilizer is desired in many cases, the nutrient is at least one from the above 'biological origin' such as animal waste, crop residues, compost, biosolids and combinations thereof.

Optionally in addition to the nutrient, the fertilizer may include fillers, oligoelements, micronutrients, bio stimulants, pigments, bacteria, yeast, fungi, enzymes, pesticides, fungicides, herbicides and combinations thereof.

Fertilizers coated with the coating described herein have exhibited an anti-caking benefit of more than about 5%, preferably up to at least about 10% as compared to uncoated fertilizer. One method to determine anti-caking is IFDC test procedure: IFDC S-106 titled Caking Tendency.

In many instances the granules are hygroscopic. The fertilizers are generally produced in the form of granules, through processes of granulation, crystallization, compaction or prilling, which are stored in bulk or in bags. During storage, under the influence of compaction and/or climatic fluctuations, more particularly variations in the degree of humidity, granular fertilizers may go through crystal structure changes (expand and contract) depending on the conditions and the exchange of moisture from the granule to environment or environment to granule can impact the integrity of the finished product.

Embodiments included herein may also include an embodiment in which the granular fertilizer includes the nutrient, optional glycerin, DMI and NBPT. The DMI, the optional glycerin and the NBPT may not be in the form of a coating. Alternatively a first portion of the DMI, the optional glycerin and the NBPT may not be in the form of a coating and a second portion of the glycerin, the DMI and the NBPT may be in the form of a coating.

Two techniques that may be used to form an embodiment in which the embodiments not in the form of a coating is crystallization or prilling.

In an alternate embodiment, the coatings described herein at least substantially, optionally wholly, in the form of a coating either substantially (at least 50% of the exterior surface of the nutrient) or fully encapsulates the nutrient of the granular fertilizer, thereby forming the coated granular fertilizer.

One embodiment to make this coating, glycerin and DMI are mixed together at 45°C while stirring rapidly using an overhead mixer for approximately 30 minutes. NBPT is added and the heat and agitation are maintained until full dissolution, approximately 4 hours. The product is left to rest at 25°C over night, approximately 12 hours.

The stability of the coating can be checked in at least 2 ways. First, a visual inspection to determine if any crystallization or precipitation of NBPT has occurred. Tests have shown the product is stable for > 60 days at room temperature. Second, the stability of NBPT itself can be checked by phosphorus-31 NMR. A solution of 10 mg of the coating in 0.7 mL dimethyl sulfoxide-d6 can be compared to a similar solution of pure NBPT to ensure NBPT is present in the coating.

Embodiments disclosed herein have the advantage of using nonhazardous materials to dissolve NBPT for application as a fertilizer coating, preferably using only nonhazardous materials. Additionally embodiments of the coating disclosed herein have improved the stability of the coating and/or increased the resistance of the NBPT to crystallize when in solution. Further embodiments, disclosed herein do not require the use of mineral fillers and/or surfactants to disperse the NBPT into the coating solution. The raw materials described herein may also be described as bio-sourced and/or bio-degradable.

A further advantage of the coating described herein is an odor of the coating is more pleasing than typical NBPT coatings. The odor is more characteristic of diluted NBPT compositions. Preferably, the coating composition does not have a pungent odor, i.e., a cabbage-like odor. It is preferred that the coating composition does not off gas a sufficient amount of methyl mercaptan for the composition to exhibit a cabbage-like odor at ambient conditions as well as during use conditions of the composition.

Fertilizers coated with the coating described herein have exhibited an anti-caking benefit of more than about 5%, preferably up to at least about 10% as compared to uncoated fertilizer. One method to determine anti-caking is IFDC test procedure: IFDC S-106 titled Caking Tendency

Furthermore embodiments of the NBPT coating described herein can be formulated with raw materials that are sustainable and/or renewable. The raw materials may also be considered "green". "Green" is used herein to describe a raw material that is considered environmentally friendly, typically derived from renewable sources like agricultural crops, and designed to minimize environmental impact compared to traditional petrochemical solvents.

### Method of making the coated fertilizer

Also another aspect of the invention is a method of making coated fertilizer comprising applying, preferably spraying, a solution to a core comprising a nutrient, the solution comprising an urease inhibitor, preferably the urease inhibitor comprising a N-(n-butyl) thiophosphoric triamide ("NBPT"), a bio-renewable solvent, preferably the bio-renewable solvent comprises at least one from the group of glycerin, corn syrup, dextrin, sorbitol and any combination thereof, a polar compound derived from a renewable feed stock, optionally green, preferably an aprotic compound, more preferably at least one of dimethyl isosorbide ("DMI"), valerolactone, cyrene, levoglucosan or combinations thereof, further preferably the dimethyl isosorbide, and optionally further comprising a water soluble dye.

### DESCRIPTION OF THE DRAWINGS

Figure 1 is a graph of the moisture absorbance vs relative humidity of uncoated urea fertilizer and urea fertilizer coated with an embodiment in accordance with the claimed invention.
Figure 2 is a bar chart of the caking reduction comparing uncoated urea fertilizer and urea fertilizer coated with an embodiment in accordance with the claimed invention.
Figure 3 is a bar chart of the force need to break apart agglomerated granules of (1) the uncoated urea fertilizer and (2) the urea fertilizer coated with an embodiment in accordance with the claimed invention.

### EXAMPLES

The present invention is further illustrated by the following examples. In order that those skilled in the field may better understand how the present invention can be practiced, the following examples are given by way of illustration only and not necessarily by way of limitation. Regarding the percentages of components, the percentages are by weight percent (wt%) based on the entire weight of the composition unless stated otherwise.

An embodiment of a granular fertilizer having the coating according to the invention (noted coating A herein) was evaluated relative to uncoated fertilizer for improvements in anti-caking and/or moisture uptake. The chosen granular fertilizer was urea.

Coating A included about 85 wt% of the bio-renewable solvent in the form of technical grade glycerin (about 51 wt%) and crude grade glycerin (about 34 wt%), about 10 wt% of a urease inhibitor in the form of NBPT, about 2.5 wt% of the polar compound in the form of DMI and about 2.5 wt% of the optional dye.

The coating was applied to the urea fertilizer at a rate of about 3 kg/mt for the moisture uptake testing and 2 lb./ ton (1 kg/mt) for the anti-caking testing. As part of the moisture uptake testing it was confirmed the coating was stable after 1 week at room temperature.

The summary results of the testing are provided below in Table 1.

**Table 1**

| Moisture Absorption Reduction (% compared to uncoated) | 11 |
|---|---|
| Stability after 1 week at Room Temperature | Stable |
| Dust Reduction (% compared to uncoated) | 30% |
| Caking Reduction (% compared to uncoated) | 8% |

### Moisture Uptake

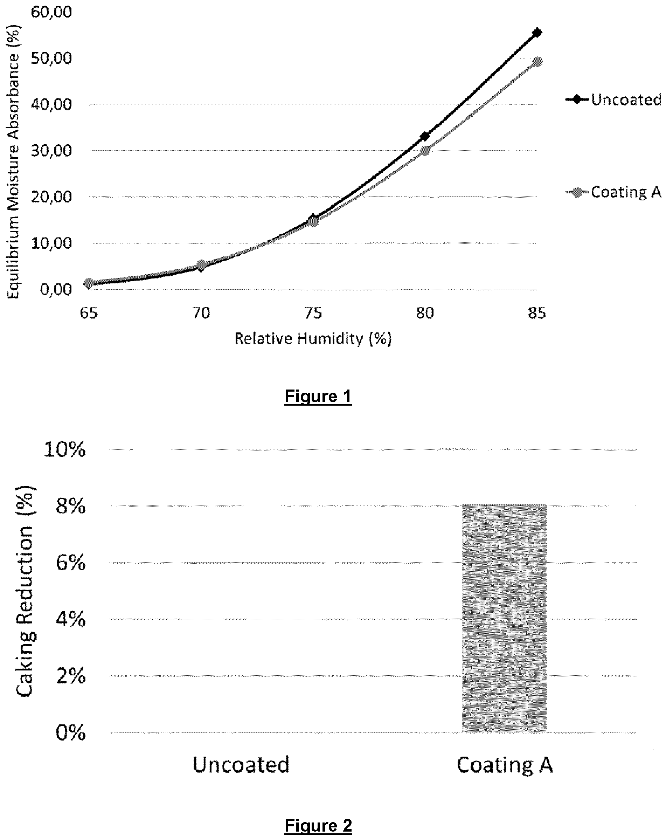

The coated and uncoated granular fertilizer was subjected to the following relative humidity profile in an environmental chamber at 30°C for about 3 days. The granular fertilizer was measured for increase in mass and the average mass increase was recorded in Table 2 in terms of the percentage of mass increase. The percentage of mass increase was determined from a base line sample of an uncoated granular fertilizer maintained under the same conditions. For further explanation, for each relative humidity, the experiment was run 3 times. The benefit of the coating according to the invention to reduce moisture uptake is apparent from Figure 1 which is a graph of the moisture absorbance (i.e. uptake) in terms of percentage of the increase in mass of the granular as a function of relative humidity. As illustrated in Figure 1, the coating according to the invention exhibited clear benefit in moisture reduction as the relative humidity increased above 70%.

**Table 2**

| **Relative Humidity (%)** | **Uncoated Control** | **3 kg/mt Coated** |
|---|---|---|
| **45** | 0.00 | 0.00 |
| **50** | 0.03 | 0.06 |
| **55** | 0.12 | 0.21 |
| **60** | 0.36 | 0.57 |
| **65** | 1.11 | 1.55 |
| **70** | 4.85 | 5.36 |
| **75** | 15.29 | 14.56 |
| **80** | 33.12 | 30.00 |
| **85** | 55.54 | 49.31 |
| **Avg % diff from uncoated** | | 11 |

### Anti-caking

In this example pluralities of the coated granular fertilizer and the uncoated granular fertilizer are conditioned in an environmental chamber. The conditioning includes exposing a mass of the particles: a first of uncoated particles and a second of coated particles. The coated fertilizer was coated at a dosage rate of about 2 lb./ton (1 kg/mt) at 30°C and 75% relative humidity and 10 psi for 6 hours, thereby forming the agglomerations of (a) the uncoated fertilizer and (b) the coated fertilizer. Each agglomeration is dried for 4 hours at 45°C and 15% relative humidity at 10 psi. The agglomerations are allowed to cool for 2 hours at 25°C and 25% relative humidity at 10 psi.

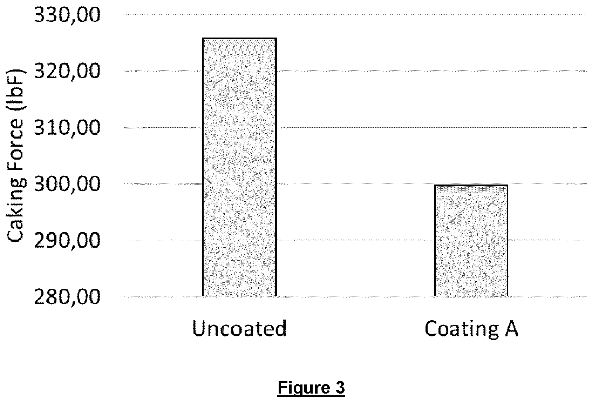

A pneumatic press was used to break apart the agglomerations and the force required to break apart the agglomerations was recorded. Similar to the above moisture uptake experiment, 3 samples of the control and the coating according to the invention were tested and the average force for breaking apart the agglomerations are reported in Table 3 and illustrated in Figures 2 and 3.

**Table 3**

| Sample | Average Breaking Force (lbf) | % Difference from Uncoated (Caking Reduction) |
|---|---|---|
| Uncoated Control | 325.87 | |
| Example Coated at a dosage of 2lb/ton (1 kg/mt) | 299.70 | 8% |

### Dust Reduction

The reduction in dust generation relative to uncoated fertilizer was also evaluated.

Dust control performance was evaluated on a urea fertilizer substrate. Multiple fertilizer samples were subjected to the test conditions. Test subjects included (a) the uncoated control, (b) the sample with the above described coating according to the invention. The coating was applied to the fertilizer samples at the dosage rate of 2 lb./ton (1 kg/mt) and agitated to ensure even coating application to all of the fertilizer granules.

Using a vertical crossflow vacuum dust extraction apparatus, the fertilizer samples were analyzed to quantify the initial amount of free dust present after application. Performance was evaluated based on the reduction in free dust present in the coated samples compared to the uncoated samples.

While this invention has been described in detail with reference to certain preferred embodiments, it should be appreciated that the present disclosure is not limited to those precise embodiments. Rather, in view of the present disclosure, many modifications and variations would present themselves to those skilled in the art without departing from the scope and spirit of this invention.

Preferred is the following set of clauses 1-23:
1. A fertilizer coating comprising
   a. a urease inhibitor, preferably the urease inhibitor comprises a N-(n-butyl) thiophosphoric triamide ("NBPT"),
   b. a bio-renewable solvent, preferably the bio-renewable solvent comprises at least one from the group of glycerin, corn syrup, dextrin, sorbitol and any combination thereof,
   c. a polar compound derived from a renewable feed stock, optionally green, preferably an aprotic compound, more preferably at least one of dimethyl isosorbide ("DMI"), valerolactone, cyrene, levoglucosan or combinations thereof, further preferably the dimethyl isosorbide, and
   d. preferably further comprising a water soluble dye,

   preferably an amount of the polar compound derived from the renewable feed stock in the fertilizer coating comprises no more than about 20 wt%, more preferably no more than about 15 wt%, further preferably at least about 1 wt%, even further preferably at least about 5 wt% or alternatively an amount of the polar compound derived from the renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof,
   preferably an amount of the bio-renewable solvent, preferably the glycerin, in the fertilizer coating comprises at least about 50 wt%, more preferably no more than about 90 wt%, further preferably no more than about 85 wt%, even further preferably at least about 60 wt% or alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof,
   preferably an amount of the urease inhibitor, preferably the NBPT, in the fertilizer coating comprises at least about 5 wt%, more preferably no more than about 30 wt%, further preferably no more than about 25 wt%, even further at least about 10 wt% or in the alternative an amount of the urease inhibitor, preferably the NBPT, in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.
2. The fertilizer coating of clause 1 wherein the coating having
   a. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
   b. the coating having no more than about 5 wt% of a carbonate compound, preferably no more than about 1 wt% of the carbonate compound, more preferably no more than about 0.1 wt% of the carbonate compound, further preferably devoid of the carbonate compound, and/or
   c. the coating having no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone.
3. The fertilizer coating of any one of the preceding clauses further comprising the water soluble dye, preferably an amount of the water soluble dye in the fertilizer coating comprises no more than about 10 wt%, more preferably no more than about 5 wt%, further preferably at least about 1 wt%, more further preferably up to about 5 wt% or alternatively an amount of the water soluble dye in the fertilizer coating comprises from about 1 wt% to about 3, about 3 wt% to about 5 wt%, about 5 wt% to about 7 wt%, about 7 wt% to about 10 wt%, or combinations thereof.
4. The fertilizer coating of any one of the preceding clauses wherein the coating essentially consists of, or consists of, the NBPT, the bio-renewable solvent and the DMI.
5. The fertilizer coating of any one of the preceding clauses wherein the coating comprises more than 10 wt% of the NBPT, preferably more than 15 wt%, more preferably at least about 20 wt%, further preferably more than 20 wt%.
6. The fertilizer coating of any one of the preceding clauses wherein the coating comprises only biodegradable and/or renewable materials.
7. The fertilizer coating of any one of the preceding clauses wherein the coating exhibiting stability for at least about 30 days, preferably at least about 45 days, more preferably at least about 60 days at or about room temperature, preferably at about 25°C±5°C, as determined by methods described herein.
8. The fertilizer coating of any one of the preceding clauses wherein the bio-renewable solvent comprises the glycerin wherein the glycerin comprises less than 50 wt% of water, preferably no more than about 25 wt% of the water, more preferably no more than about 10 wt% of the water, further preferably no more than about 5 wt% of water, even further preferably no more than 2 wt% of the water, preferably determined by one of direct distillation, Phosphorous Pentoxide vacuum method, Karl-Fischer Titration or Halogen Moisture Analysis.
9. The fertilizer coating of any one of the preceding clauses wherein the glycerin having a pH of at least about 6.0 to no more than about 8.0, preferably at least about 6.5 to no more than about 7.5.
10. The fertilizer coating of any one of the preceding clauses having an SDS without a flammability hazard warning.
11.The fertilizer coating of any one of the preceding clauses further comprising a release agent, preferably the release agent comprises a cyano-material.
12. The fertilizer coating of any one of the preceding clauses wherein the NBPT selected from the group of sole NBPT, a controlled release form of NBPT, NBPT and other urease inhibitors, NBPT and nitrification inhibitors and combinations thereof.
13. The fertilizer coating of any one of preceding clauses wherein the polar compound derived from the renewable feed stock having a. a dipole moment of more than about 4.1D at 25°C, preferably more than 4.1D at 25°C, more preferably at least about 4.2D at 25°C, and/or b. further preferably a refractive index of the polar compound derived from the renewable feed stock comprises less than about 1.467 at 20°C, even further preferably less than about 1.465 at 20°C, still further preferably less than about 1.463 at 20°C, most preferably, and/or c. the polar compound derived from a renewable feed stock devoid of at least one of a nitrogen atom, sulfur atom or the combination thereof.
14. The fertilizer coating of any one of the preceding clauses, wherein
   a. the amount of the NBPT comprises at least about 10 wt%, preferably at least about 20 wt%, and
   b. the NBPT does not crystallize in the coating for at least about 2 weeks, preferably at least about 30 days, more preferably at least about 60 days, even more preferably at least about 90 days, crystallization determined as herein described.
15. A fertilizer granular comprising a core and the fertilizer coating of any one of the preceding clauses , preferably the core comprises a nutrient, preferably a plurality of nutrients, more preferably either the at least one nutrient or the plurality of nutrients comprises at least one of ammonium sulfate, urea, potash (e.g., muriate of potash), potassium chloride, NPK, biological origin and combinations thereof, more preferably biological origin comprises at least one from the group of animal waste, crop residues, compost, biosolids and combinations thereof.
16.A fertilizer granular comprising, or consisting essentially of, a nutrient, NBPT, DMI, bio-renewable solvent and an optional water soluble dye.
17. The granular fertilizer of either one of clauses 15 or 16 having a shelf life of more than about 2 weeks, preferably more than about 3 weeks, more preferably more than about 4 weeks, even more preferably more than about 6 weeks, further preferably more than about 8 weeks, even further preferably more than about 10 weeks.
18. The granular fertilizer of any one of clauses 15-17 exhibiting a reduction in caking of up to about 25% compared to the uncoated granular, preferably at least about 10%, more preferably at least about 15%, caking reduction determined as described herein.
19.A fertilizer coating comprising, preferably consisting essentially of:
   a. a urease inhibitor, preferably the urease inhibitor comprises a N-(n-butyl) thiophosphoric triamide ("NBPT"),
   b. a bio-renewable solvent, preferably the bio-renewable solvent comprises at least one from the group of glycerin, corn syrup, dextrin, sorbitol and any combination thereof,
   c. a third component having
      i. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
      ii. no more than about 5 wt% of a carbonate compound, preferably no more than about 1 wt% of the carbonate compound, more preferably no more than about 0.1 wt% of the carbonate compound, further preferably devoid of the carbonate compound, and/or
      iii. no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone, and
   d. preferably further comprising a water soluble dye,

   preferably an amount of the third component in the fertilizer coating comprises no more than about 20 wt%, more preferably no more than about 15 wt%, further preferably at least about 1 wt%, even further preferably at least about 5 wt% or alternatively an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof,
   preferably an amount of the bio-renewable solvent, preferably the glycerin, in the fertilizer coating comprises at least about 50 wt%, more preferably no more than about 90 wt%, further preferably no more than about 85 wt%, even further preferably at least about 60 wt% or alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof,
   preferably an amount of the urease inhibitor, preferably the NBPT, in the fertilizer coating comprises at least about 5 wt%, more preferably no more than about 30 wt%, further preferably no more than about 25 wt%, even further at least about 10 wt% or in the alternative an amount of the urease inhibitor, preferably the NBPT, in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.
20. The fertilizer coating of clause 19 wherein the third component derived from a renewable feed stock, optionally green, preferably an aprotic compound, more preferably at least one of dimethyl isosorbide ("DMI"), valerolactone, cyrene, levoglucosan or combinations thereof, further preferably the dimethyl isosorbide.
21. A fertilizer coating comprising
   a. a urease inhibitor, preferably the urease inhibitor comprising a N-(n-butyl) thiophosphoric triamide ("NBPT"),
   b. a bio-renewable solvent, preferably the bio-renewable solvent comprises at least one from the group of glycerin, corn syrup, dextrin, sorbitol and any combination thereof,
   c. a polar compound derived from a renewable feed stock having
      i. a dipole moment of more than about 4.1D at 25°C, preferably more than 4.1D at 25°C, more preferably at least about 4.2D at 25°C, and/or
      ii. further preferably a refractive index of the polar compound derived from a renewable feed stock comprises less than about 1.467 at 20°C, even further preferably less than about 1.465 at 20°C, still further preferably less than about 1.463 at 20°C, and
   d. preferably further comprising a water soluble dye,

   preferably an amount of the polar compound in the fertilizer coating comprises no more than about 20 wt%, more preferably no more than about 15 wt%, further preferably at least about 1 wt%, even further preferably at least about 5 wt% or alternatively an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof,
   preferably an amount of the bio-renewable solvent, preferably the glycerin, in the fertilizer coating comprises at least about 50 wt%, more preferably no more than about 90 wt%, further preferably no more than about 85 wt%, even further preferably at least about 60 wt% or alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof,
   preferably an amount of the urease inhibitor, preferably the NBPT, in the fertilizer coating comprises at least about 5 wt%, more preferably no more than about 30 wt%, further preferably no more than about 25 wt%, even further at least about 10 wt% or in the alternative an amount of the NBPT in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.
22.A method of making coated fertilizer comprising applying, preferably spraying, a solution to a core comprising a nutrient, the solution comprising
   a. an urease inhibitor, preferably the urease inhibitor comprising a N-(n-butyl) thiophosphoric triamide ("NBPT"),
   b. a bio-renewable solvent, preferably the bio-renewable solvent comprises at least one from the group of glycerin, corn syrup, dextrin, sorbitol and any combination thereof,
   c. a polar compound derived from a renewable feed stock, optionally green, preferably an aprotic compound, more preferably at least one of dimethyl isosorbide ("DMI "), valerolactone, cyrene, levoglucosan or combinations thereof, further preferably the dimethyl isosorbide, and preferably further comprising a water soluble dye

   preferably an amount of the polar compound derived from a renewable feed stock in the fertilizer coating comprises no more than about 20 wt%, more preferably no more than about 15 wt%, further preferably at least about 1 wt%, even further preferably at least about 5 wt% or alternatively an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof,
   preferably an amount of the bio-renewable solvent, preferably the glycerin, in the fertilizer coating comprises at least about 50 wt%, more preferably no more than about 90 wt%, further preferably no more than about 85 wt%, even further preferably at least about 60 wt% or alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof,
   preferably an amount of the urease inhibitor, preferably the NBPT, in the fertilizer coating comprises at least about 5 wt%, more preferably no more than about 30 wt%, further preferably no more than about 25 wt%, even further at least about 10 wt% or in the alternative an amount of the urease inhibitor, preferably the NBPT, in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof,
   wherein the applying occurs prior to transporting the coated fertilizer to a retail location.
23. The method of clause 22 wherein the nutrient optionally comprises a plurality of nutrients, preferably either the nutrient or the plurality of nutrients comprises at least one of ammonium sulfate, urea, potash (e.g., muriate of potash), potassium chloride, NPK, biological origin and combinations thereof, more preferably biological origin comprises at least one from the group of animal waste, crop residues, compost, biosolids and combinations thereof, more preferably the plurality of nutrients comprises at least two of the ammonium sulfate, urea, potash (e.g., muriate of potash), potassium chloride, NPK, biological origin and combinations thereof.

## Claims

1. A fertilizer coating comprising
a. a urease inhibitor, preferably the urease inhibitor comprises a N-(n-butyl) thiophosphoric triamide ("NBPT"),
b. a bio-renewable solvent, preferably the bio-renewable solvent comprises at least one from the group of glycerin, corn syrup, dextrin, sorbitol and any combination thereof,
c. a third component having:
i. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
ii. no more than about 5 wt% of a carbonate compound, preferably no more than about 1 wt% of the carbonate compound, more preferably no more than about 0.1 wt% of the carbonate compound, further preferably devoid of the carbonate compound, and/or
iii. no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone.

2. The fertilizer coating of claim 1 wherein the third component comprises a polar compound derived from a renewable feed stock and the amount of the polar compound derived from the renewable feed stock in the fertilizer coating comprises no more than about 20 wt%, more preferably no more than about 15 wt%, further preferably at least about 1 wt%, even further preferably at least about 5 wt% or alternatively an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof, preferably the polar compound comprises an aprotic compound, preferably selected from dimethyl isosorbide ("DMI"), valerolactone, cyrene, levoglucosan or combinations thereof, preferably the dimethyl isosorbide.

3. The fertilizer coating of any one of the preceding claims wherein an amount of the bio-renewable solvent, preferably the glycerin, in the fertilizer coating comprises at least about 50 wt%, more preferably no more than about 90 wt%, further preferably no more than about 85 wt%, even further preferably at least about 60 wt% or alternatively an amount of the bio-renewable solvent in the fertilizer coating comprises at least about 50 wt% to about 60 wt%, about 60 wt% to about 70 wt%, about 70 wt% to about 80 wt%, about 80 wt% to about 90 wt% or combinations thereof.

4. The fertilizer coating of any one of the preceding claims wherein an amount of the urease inhibitor, preferably the NBPT, in the fertilizer coating comprises at least about 5 wt%, more preferably no more than about 30 wt%, further preferably no more than about 25 wt%, even further at least about 10 wt% or in the alternative an amount of the urease inhibitor, preferably the NBPT, in the fertilizer coating comprises about 5 wt% to about 10 wt%, about 10 wt% to about 15 wt%, about 15 wt% to about 20 wt%, about 20 wt% to about 25 wt%, about 25 wt% to about 30 wt% or combinations thereof.

5. The fertilizer coating of any one of the preceding claims further comprising a water soluble dye, preferably an amount of the water soluble dye in the fertilizer coating comprises no more than about 10 wt%, more preferably no more than about 5 wt%, further preferably at least about 1 wt%, more further preferably up to about 5 wt% or alternatively an amount of the water soluble dye in the fertilizer coating comprises from about 1 wt% to about 3, about 3 wt% to about 5 wt%, about 5 wt% to about 7 wt%, about 7 wt% to about 10 wt%, or combinations thereof.

6. The fertilizer coating of any one of the preceding claims wherein the coating exhibiting stability for at least about 30 days, preferably at least about 45 days, more preferably at least about 60 days at or about room temperature, preferably at about 25°C+5°C, as determined by methods described herein.

7. The fertilizer coating of any one of the preceding claims wherein the bio-renewable solvent comprises glycerin wherein the glycerin comprises less than 50 wt% of water, preferably no more than about 25 wt% of the water, more preferably no more than about 10 wt% of the water, further preferably no more than about 5 wt% of water, even further preferably no more than 2 wt% of the water.

8. The fertilizer coating of any one of the preceding claims further comprising a release agent, preferably the release agent comprises a cyano-material.

9. The fertilizer coating of any one of the preceding claims wherein the NBPT selected from the group of sole NBPT, a controlled release form of NBPT, NBPT and other urease inhibitors, NBPT and nitrification inhibitors and combinations thereof.

10. The fertilizer coating of any one of the preceding claims wherein the polar compound derived from a renewable feed stock having:
a. a dipole moment of more than about 4.1D at 25°C, preferably more than 4.1D at 25°C, more preferably at least about 4.2D at 25°C, and/or
b. further preferably a refractive index of the polar compound derived from a renewable feed stock comprises less than about 1.467 at 20°C, even further preferably less than about 1.465 at 20°C, still further preferably less than about 1.463 at 20°C, most preferably, and/or
c. the polar compound derived from a renewable feed stock devoid of at least one of a nitrogen atom, sulfur atom or the combination thereof.

11. A fertilizer granular comprising a core and the fertilizer coating of any one of the preceding claims, preferably the core comprises a nutrient, preferably a plurality of nutrients, more preferably either the at least one nutrient or the plurality of nutrients comprises at least one of ammonium sulfate, urea, potash (e.g., muriate of potash), potassium chloride, NPK, biological origin and combinations thereof, more preferably biological origin comprises at least one from the group of animal waste, crop residues, compost, biosolids and combinations thereof.

12. The granular fertilizer of claim 11 having a shelf life of more than about 2 weeks, preferably more than about 3 weeks, more preferably more than about 4 weeks, even more preferably more than about 6 weeks, further preferably more than about 8 weeks, even further preferably more than about 10 weeks.

13. The granular fertilizer of any one of claims 11 or 12 exhibiting a reduction in caking of up to about 25% compared to the uncoated granular, preferably at least about 10%, more preferably at least about 15%, caking reduction determined as described herein.

14. A method of making coated fertilizer comprising applying, preferably spraying, a solution to a core comprising a nutrient, the solution comprising:
a. an urease inhibitor, preferably the urease inhibitor comprising a N-(n-butyl) thiophosphoric triamide ("NBPT"),
b. a bio-renewable solvent, preferably the bio-renewable solvent comprises at least one from the group of glycerin, corn syrup, dextrin, sorbitol and any combination thereof,
c. a third component having
i. no more than about 5 wt% of a compound having a sulfonyl group, preferably no more than about 1 wt% of the compound having the sulfonyl group, more preferably no more than about 0.1 wt% of the compound having the sulfonyl group, further preferably devoid of the compound having the sulfonyl group, and/or the compound having the sulfonyl group comprises dimethyl sulfoxide, and/or
ii. no more than about 5 wt% of a carbonate compound, preferably no more than about 1 wt% of the carbonate compound, more preferably no more than about 0.1 wt% of the carbonate compound, further preferably devoid of the carbonate compound, and/or
iii. no more than about 5 wt% of a pyrrolidone compound, preferably no more than about 1 wt% of the pyrrolidone compound, more preferably no more than about 0.1 wt% of the pyrrolidone compound, further preferably devoid of the pyrrolidone compound, preferably the pyrrolidone compound comprises n-methyl 2 pyrrolidone.

15. The method of making a coated fertilizer of claim 14 wherein the third component comprises a polar compound derived from a renewable feed stock and the amount of the polar compound derived from a renewable feed stock in the fertilizer coating comprises no more than about 20 wt%, more preferably no more than about 15 wt%, further preferably at least about 1 wt%, even further preferably at least about 5 wt% or alternatively an amount of the polar compound derived from a renewable feed stock in the fertilizer coating comprises from about 1 wt% to about 5 wt%, about 5 wt% to about 10 wt%, about 10 wt% to about 15 wt%, about 15 wt% to about 20 wt% or combinations thereof, preferably the polar compound comprises an aprotic compound, preferably selected from dimethyl isosorbide ("DMI"), valerolactone, cyrene, levoglucosan or combinations thereof, preferably the dimethyl isosorbide.
